# EUROPÄISCHE PATENTSCHRIFT

(11) **EP 2 421 755 B1**
(45) Veröffentlichungstag und Bekanntmachung des Hinweises auf die Patenterteilung: **17.10.2018**
(21) Anmeldenummer: 10714291.1
(22) Anmeldetag: 20.04.2010
(51) Int. Cl.: B64D 11/00

(54) **PASSAGIERVERSORGUNGSKANAL**
PASSENGER UTILITY CONDUIT
CANAL POUR ÉQUIPEMENTS POUR PASSAGERS

(30) Priorität: 20.04.2009 DE 102009018111; 20.04.2009 US 170948 P
(43) Veröffentlichungstag der Anmeldung: 29.02.2012
(73) Patentinhaber: Airbus Operations GmbH, 21129 Hamburg (DE)
(72) Erfinder: GEHM, Marcus, 21614 Buxtehude (DE); VOGT, Thomas, 22547 Hamburg (DE); DANNENBERG, Andreas, 21629 Neu Wulmstorf (DE)
(74) Vertreter: LKGLOBAL Lorenz & Kopf PartG mbB Patentanwälte
(86) Internationale Anmeldenummer: PCT/EP2010/055187
(87) Internationale Veröffentlichungsnummer: WO 2010/122017

(56) Entgegenhaltungen:
- WO-A2-2007/150070
- DE-B3-102007 014 406
- GB-A- 2 430 118
- US-A- 3 330 506
- US-B1- 6 489 745

## Beschreibung

### VERWANDTE ANMELDUNGEN

Die vorliegende Anmeldung beansprucht die Priorität der deutschen Patentanmeldung 10 2009 018 111.3, eingereicht am 20. April 2009, und der US-Provisional Application 61/170,948, eingereicht am 20. April 2009.

### GEBIET DER ERFINDUNG

Die Erfindung betrifft die Versorgung von Passagieren in einem Luftfahrzeug. Insbesondere betrifft die Erfindung einen Passagierversorgungskanal mit einem Multifunktionsmodul, ein Luftfahrzeug mit einem Passagierversorgungskanal sowie ein Verfahren zum Versorgen von Passagieren mittels eines Multifunktionsmoduls für einen Passagierversorgungskanal in einem Luftfahrzeug.

### HINTERGRUND DER ERFINDUNG

Passagierversorgungseinheiten wie Leseleuchten, Lautsprecher und Zeichenanzeigen (Signs), Luftduschen, Sauerstoffmasken, Einfüllpaneele (Infill Panels) können als einzelne Elemente für jedes Passagierlayout individuell zusammengestellt werden und so in einem Flugzeug bzw, in einem Passagierversorgungskanal platziert werden, dass die Elemente zu den Sitzen ausgerichtet sind.

Dabei müssen die genaue Position beachtet sowie Spaltmasse überprüft und eingestellt werden. Der Definitions-, Verwaltungs- und Installationsaufwand ist dabei groß und kostet oft viel Zeit und Geld. Kleinste Abweichungen in der Position und in der Farbgebung, die beispielsweise aufgrund unterschiedlicher Hersteller der Elemente vorhanden sind, sind gut sichtbar und führen immer wieder zu Beanstandungen der Airlines. Auch Veränderungen des Layouts bedeuten einen großen Aufwand in der Anpassung des Passagierversorgungskanals.

Aus der DE 103 07 147 A1 und der US 2004/0213005 A1 ist eine Leseleuchte für Flugzeugkabinen bekannt, die über einem Passagiersitz installiert ist.

Die DE 10 2006 049 030 B3 beschreibt ein Lautsprechersystem für eine Flugzeugkabine. Die US 3 330 506 beschreibt ein neben Schienen verfahrbares Multifunktionsmodul für einen Passagierversorgungskanal in einem Luftfahrzeug. Hierbei kann eine Sauerstoffversorgungsleitung über eine Schnellanschlusskupplung angeschlossen werden.

In der GB 2 430 118 A wird eine Passagierversorgungseinheit (PSU) beschrieben, welche auf Montageschienen aufgeschnappt werden kann; die Stromversorgung für eine derartige PSU erfolgt über eine Stromschiene, die mit einer Montageschiene vereinigt ausgebildet sein kann. Eine drahtlose Passagiersteuereinheit und ein Drahtlosempfänger der PSU dienen zur Übertragung von Steuerbefehlen.

Die DE 10 2007 014 406 B3 beschreibt einen Versorgungskanal mit einem Luftverteilungssystem für Fahrzeuge, ein Flugzeug mit einem derartigen Versorgungskanal, und ein Verfahren zum Ausbilden eines Versorgungskanals. Der Versorgungskanal ermöglicht ein variables Positionieren von Luftduschen entlang seiner Längsrichtung, und in dem Versorgungskanal können weitere Zuleitungen und Einrichtungen vorgesehen sein, um zum Beispiel Sitze mit Strom oder in den Versorgungskanal integrierte Lautsprecher mit elektrischen Signalen zu versorgen.

Die DE 195 02 658 C1 beschreibt eine Anordnung zum Versorgen von Passagieren in einer Passagierkabine, insbesondere in einem Flugzeug, bestehend aus einer Versorgungseinheit mit Komfort- und Bedienelementen, wie Leseleuchte, Stewardruftaste, Lautsprecher, Luftdüse und dergleichen, und Zuführleitungen von einer Versorgungsleitung zur Versorgungseinheit.

Die US 2008/0112155 A1 beschreibt eine Passagierversorgungseinheit (PSU) mit einem Gehäuse, das eine daran angebrachte Luftdüse aufweist, wobei ein Ring aus Licht emittierenden Dioden an dem Gehäuse so angebracht ist, dass diese die Luftdüse umgeben.

Die US 2008/0112155 A1 beschreibt eine Passagierversorgungseinheit (PSU) mit einem Gehäuse, das eine daran angebrachte Luftdüse aufweist, wobei ein Ring aus Licht emittierenden Dioden an dem Gehäuse so angebracht ist, dass diese die Luftdüse umgeben.

In der WO 03/052974 A1 wird ein Lokalbereichsnetzwerk auf einer Mobilplattform, beispielsweise einem Flugzeug beschrieben, bei welchem eine direkte Signalübertragung von Infrarotsignalen zwischen einem Passagiersitz und einer darüber angeordneten Passagierversorgungseinheit (PSU) vorgesehen ist.

Die US 2006/0ß32979 A1 beschreibt ein System zur Bestimmung der Konfiguration der Innenkabine eines Flugzeuges, in welchem Radiofrequenzsender vorgesehen sind, welche Radiofrequenzsignale übertragen, die miteinander interferieren, und ein resultierendes Signal bilden, das zur Positionsbestimmung von Objekten genutzt wird.

Die DE 10 2006 061 455 A1 beschreibt eine Anordnung zumindest einer Passagierversorgungseinheit (PSU), etwa in einem Flugzeug, wobei eine Schiene angeordnet ist, die mindestens einen Leiter aufweist. Die PSU weist zumindest einen Stromabnehmer auf, der so angeordnet ist, dass er den zumindest einen Leiter der Schiene im eingebauten Zustand der PSU leitend kontaktiert.

Die US 6 796 690 B2 beschreibt eine LED-Lichtquelle für Passagierkabinen, welche eine geordnete Anordnung aus mehreren LEDs aufweist, wobei eine Elektroniksteuerung den Strompegel für bestimmte LEDs so einstellt, dass unterschiedliche Lichtstrahlmuster zur Verfügung gestellt werden. Die Kommunikation mit der LED-Lichtquelle erfolgt über einen seriellen Datenbus.

Aus der US 2008/0089079 A1 ist eine Leuchte beispielsweise für Flugzeuge bekannt, welche mehrere Beleuchtungselemente aufweist, welche einzeln oder in Gruppen aktiviert werden können, Die Beleuchtungselemente können als LEDs ausgebildet sein, deren Anoden und Kathoden an eine Leiterplatte angeschlossen sind, auf welcher die Steuer- und Leistungselektronik der Leuchte vorgesehen sind.

### ZUSAMMENFASSUNG DER ERFINDUNG

Es kann als Aufgabe der Erfindung gesehen werden, eine einfache, kostengünstige und flexible Versorgung von Passagieren bereitzustellen.

Gemäß der Erfindung werden ein Passagierversorgungskanal nach Anspruch 1, ein Luftfahrzeug nach Anspruch 11, und ein Verfahren nach Anspruch 12 zur Verfügung gestellt. Weiterbildungen der Erfindung werden durch die abhängigen Ansprüche verkörpert.

Gemäß der Erfindung weist der Passagierversorgungskanal ein Multifunktionsmodul mit einer ersten Schnittstelle und wenigstens einer Versorgungseinheit zum Versorgen eines Passagiers auf. Die erste Schnittstelle ist zum Anschluss der wenigstens einen Versorgungseinheit an den Passagierversorgungskanal ausgeführt.

Unter dem Begriff Multifunktion kann verstanden werden, dass beispielsweise alle Funktionen zur Versorgung des Passagiers integriert ausgeführt sind, so dass keine weiteren Einbauten zur Versorgung der Passagiere notwendig sind. Unter dem Begriff Modul ist ein Bauteil zu verstehen, dass in ein Gehäuse integriert werden kann, und das als Einheit leicht ausgetauscht werden kann.

Bei einer Ausführungsform der Erfindung erfolgt ein automatischer Anschluss der wenigstens einen Versorgungseinheit an den Passagierversorgungskanal bei der Installation des Multifunktionsmoduls an den Passagierversorgungskanal. Der automatische Anschluss der wenigstens einen Versorgungseinheit an den Passagierversorgungskanal kann kontaktlos ausgeführt sein.

Ein derartiger automatischer Anschluss der Versorgungseinheit bei der Installation des Multifunktionsmoduls an dem Passagierversorgungskanal ermöglicht beispielsweise eine einfache Installation, einen einfachen Umbau und den Einbau verschiedener Kundenversionen der Verbrauchereinheit ohne Anpassungen im Flugzeug.

Ein derartiger automatischer Anschluss der Versorgungseinheit bei der Installation des Multifunktionsmoduls an dem Passagierversorgungskanal ermöglicht beispielsweise eine einfache Installation, einen einfachen Umbau und den Einbau verschiedener Kundenversionen der Verbrauchereinheit ohne Anpassungen im Flugzeug. Bei einer weiteren Ausführungsform der Erfindung ist die Schnittstelle als mechanische Schnittstelle ausgeführt. Die mechanische Schnittstelle ist zum Befestigen des Multifunktionsmoduls an den Passagierversorgungskanal und zum Anschließen der Versorgungseinheiten an dem Passagierversorgungskanal ausgeführt.

Bei einer weiteren Ausführungsform der Erfindung ist die Versorgungseinheit aus einer Gruppe bestehend aus einer Lesebeleuchtungseinheit, einer Lautsprechereinheit, einer Zeichenanzeigeeinheit, einer Luftduscheinheit, einer Sauerstoffversorgungseinheit, einer Sauerstoffspeichereinheit oder Sauerstofferzeugungseinheit und einer Klappe gebildet.

Bei einer weiteren Ausführungsform der Erfindung können viele weitere Schnittstellen und Versorgungseinheiten vorgesehen sein, die alle anschließbar sind an entsprechenden Versorgungsleitungen des Passagierversorgungskanals.

Ein derartiges Multifunktionsmodul ermöglicht es, dass der Definitions- und Verwaltungsaufwand sowie der Installationsaufwand von Passagierversorgungseinheiten in den Passagierversorgungskanal (PSC) verringert werden kann,

Eine derartige Multifunktionseinheit weist ferner den Vorteil auf, dass eine Veränderung der Kabine durch schnelle Anpassung der Versorgungseinheiten ermöglicht werden kann.

Bei einer derartigen Multifunktionseinheit kann der Fertigungsprozess der Multifunktionseinheit sowie des Passagierversorgungskanals vereinfacht werden, da Spaltmaße und Schnittstellen für einzelne Versorgungseinheiten entfallen. Das ganze Multifunktionsmodul kann vom Hersteller beispielsweise auf Qualität und Funktion geprüft werden, wodurch Fehler durch Verkanten einzelner Versorgungseinheiten oder Unterschreiten von Mindestspaltmaßen in der Fertigung einzelner Versorgungseinheiten entfallen können.

Ein derartiges Multifunktionsmodul weist den Vorteil auf, dass der Passagierversorgungskanal optisch ansprechend gestaltet werden kann, indem beispielsweise Freistellen zwischen zwei multifunktionalen Elementen nicht mehr mit Einfüllpaneelen (Infill Panels) unterschiedlicher Länge abgedeckt werden müssen.

Bei einer weiteren Ausführungsform der Erfindung ist das Multifunktionsmodul über die erste Schnittstelle durch eine mechanische Anbindung an dem Passagierversorgungskanal angebracht.

Bei einer weiteren Ausführungsform der Erfindung ist die mechanische Anbindung des Moduls an den PSC optisch nicht sichtbar.

Bei einer weiteren Ausführungsform der Erfindung sind mehrere Versorgungseinheiten in dem Multifunktionsmodul integriert ausgeführt,

Bei einer weiteren Ausführungsform der Erfindung erfolgt ein Anschließen der wenigstens einen Versorgungseinheit automatisch bei einer Bewegung des Multifunktionsmoduls in eine Endposition bei einem Installieren des Multifunktionsmoduls an dem Passagierversorgungskanal.

Bei einer weiteren Ausführungsform der Erfindung erfolgt die Bewegung des Multifunktionsmoduls in einer Richtung parallel zu einer Luftfahrzeuglängsachse.

Bei einer weiteren Ausführungsform der Erfindung erfolgt das Anschließen der wenigstens einen Versorgungseinheit automatisch bei einer Bewegung des Multifunktionsmoduls in eine Endposition bei einem Installieren des Multifunktionsmoduls an den Passagierversorgungskanal für alle im Folgenden beschriebenen Versorgungseinheiten.

Bei einer weiteren Ausführungsform der Erfindung weist das Multifunktionsmodul weiterhin eine Kommunikationseinheit auf, wobei die Kommunikationseinheit zum drahtlosen Empfang und zum drahtlosen Übermitteln von Daten zum Steuern der wenigstens einen Versorgungseinheit des Multifunktionsmoduls ausgeführt ist.

Bei einer weiteren Ausführungsform der Erfindung ist ein Kabinen-Management-System des Luftfahrzeugs zum drahtlosen Empfangen und drahtlosen Übermitteln von Daten zum Steuern der wenigstens einen Versorgungseinheit des Multifunktionsmoduls von bzw. an die Kommunikationseinheit ausgeführt.

Bei einer weiteren Ausführungsform der Erfindung weist das Multifunktionsmodul weiterhin eine Lesebeleuchtungseinheit auf, wobei die Lesebeleuchtungseinheit zum Bereitstellen einer Beleuchtung zum Lesen für die Passagiere des Luftfahrzeugs ausgeführt ist. Die Lesebeleuchtungseinheit kann mit einer Technologie aus der Gruppe bestehend aus Leuchtdioden (LED)-Technologie und organische Leuchtdioden (OLED)-Technologie ausgeführt sein.

Bei einer weiteren Ausführungsform der Erfindung weist das Multifunktionsmodul weiterhin eine Lautsprechereinheit auf, wobei die Lautsprechereinheit zum Übermitteln von akustischen Daten an die Passagiere des Luftfahrzeugs ausgeführt ist.

Bei einer weiteren Ausführungsform der Erfindung weist das Multifunktionsmodul weiterhin eine Zeichenanzeigeeinheit auf, wobei die Zeichenanzeigeeinheit zum Anzeigen von Zeichen für die Passagiere des Luftfahrzeugs ausgeführt ist und wobei die Zeichenanzeigeeinheit mit vorgelagerten Symbolblenden oder mit organischen Leuchtdioden (OLED)-Folien ausgeführt ist. Dabei kann die OLED-Folie zum Beispiel nach dem Installieren der Multifunktionsmodule als Streifen für mehrere Multifunktionsmodule an mehreren Multifunktionsmodulen angebracht werden.

Bei einer weiteren Ausführungsform der Erfindung weist das Multifunktionsmodul eine Luftduscheinheit und eine Gebläseeinheit auf, wobei die Luftduscheinheit zum Bereitstellen von Luft für Passagiere des Luftfahrzeugs ausgeführt ist und wobei die Gebläseeinheit zum Ansaugen und Ausblasen von Umgebungsluft für die Luftduscheinheit ausgeführt ist.

Bei einer weiteren Ausführungsform der Erfindung weist das Multifunktionsmodul ein Frischluftversorgungsrohr auf, wobei die Gebläseeinheit zum Absaugen von Frischluft aus dem Frischluftversorgungsrohr für die Luftduscheinheit ausgeführt ist. Dabei kann das Frischluftversorgungsrohr an einem Versorgungsrohr eines Luftfahrzeugs angeschlossen sein.

Bei einer weiteren Ausführungsform der Erfindung weist das Multifunktionsmodul eine Sauerstoffversorgungseinheit und eine Sauerstoffspeichereinheit auf, wobei die Sauerstoffversorgungseinheit zum Versorgen der Passagiere mit Sauerstoff ausgeführt ist und wobei die Sauerstoffspeichereinheit zum Speichern von Sauerstoff und zum Versorgen der Sauerstoffversorgungseinheit mit Sauerstoff ausgeführt ist.

Dabei kann die Sauerstoffversorgungseinheit beispielsweise als Sauerstoffmaske ausgeführt sein und die Sauerstoffspeichereinheit aus einer chemischen Patrone und/oder einer Druckgasflasche.

Bei einer weiteren Ausführungsform der Erfindung weist das Multifunktionsmodul eine Positionserfassungseinheit auf, wobei die Positionserfassungseinheit zum Erfassen einer definierten Endposition des Multifunktionsmoduls bei einem Installieren des Multifunktionsmoduls an den Passagierversorgungskanal ausgeführt ist.

Bei einer weiteren Ausführungsform der Erfindung ist die Positionserfassungseinheit beim Erreichen der definieren Endposition des Multifunktionsmoduls bei dem Installieren des Multifunktionsmoduls an den Passagierversorgungskanal zum Abgeben eines Signals ausgeführt. Dabei kann das Signal akustisch oder optisch sein.

Bei einer weiteren Ausführungsform der Erfindung ist ein Passagierversorgungskanal mit einem Multifunktionsmodul nach einem der vorher genannten Ausführungsbeispiele der Erfindung mit einer zweiten Schnittstelle angegeben. Die zweite Schnittstelle ist zum Anschluss der Versorgungseinheit des Multifunktionsmoduls über die erste Schnittstelle ausgeführt.

Bei der Erfindung weist der Passagierversorgungskanal eine Energieversorgungseinheit auf, wobei die Energieversorgungseinheit zur drahtlosen Ubertragung von Energie von einer Energiequelle des Luftfahrzeuges zur Energieversorgungseinheit und von der Energieversorgungseinheit in das Multifunktionsmodul ausgebildet ist. Dabei kann die drahtlose Übertragung von Energie beispielsweise über elektromagnetische Kopplung erfolgen.

Bei einer weiteren Ausführungsform der Erfindung ist die Energieversorgungseinheit zum kontaktlosen Übertragen von Strom an die Versorgungseinheit des Multifunktionsmoduls ausgeführt. Dabei kann die kontaktlose Übertragung von Strom an die Versorgungseinheit beispielsweise per Induktion oder Resonanzfrequenz erfolgen.

Bei einer weiteren Ausführungsform der Erfindung ist ein Luftfahrzeug mit einem Multifunktionsmodul nach einem der vorhergenannten Ausführungsbeispiele der Erfindung angegeben. Das Luftfahrzeug weist ein Kabinen-Management-System auf, wobei das Kabinen-Management-System zum drahtgebundenen oder drahtlosen Kommunizieren mit dem Multifunktionsmodul, beispielsweise über eine drahtlose Kommunikationsverbindung, ausgeführt ist.

Bei einer weiteren Ausführungsform der Erfindung ist ein Verfahren zum Versorgen von Passagieren mittels eines Funktionsmoduls für einen Passagierversorgungskanal in einem Luftfahrzeug vorgesehen mit einem ersten Schritt, bei dem ein Integrieren wenigstens einer Versorgungseinheit in das Multifunktionsmodul erfolgt. In einem zweiten Schritt erfolgt das Anbringen des Multifunktionsmoduls an den Passagierversorgungskanal mittels einer ersten Schnittstelle, die beispielsweise als mechanische Schnittstelle ausgeführt sein kann. In einem zweiten Schritt erfolgt das Anbringen des Multifunktionsmoduls an den Passagierversorgungskanal mittels einer ersten Schnittstelle, die beispielsweise als mechanische Schnittstelle ausgeführt sein kann. In einem dritten Schritt erfolgt ein Bereitstellen wenigstens einer Funktion mittels der wenigstens einen Versorgungseinheit für einen Passagier des Luftfahrzeugs.

Bei einer weiteren Ausführungsform der Erfindung weist das Verfahren weiterhin das automatische Anschließen der wenigstens einen Versorgungseinheit bei einer Bewegung des Multifunktionsmoduls in einer Installationsposition bei einem Installieren des Multifunktionsmoduls an den Passagierversorgungskanal auf, sowie ein drahtloses Versorgen des Multifunktionsmoduls mit Energie mittels einer Energieversorgungseinheit. Anschließend erfolgt ein drahtloses Empfangen und drahtloses Übermitteln von Daten zum Steuern der wenigstens einen Versorgungseinheit des Multifunktionsmoduls mittels einer Kommunikationseinheit.

Diese und andere Aspekte der Erfindung werden durch die hiernach beschriebenen Ausführungsbeispiele erläutert und verdeutlicht.

### KURZE BESCHREIBUNG DER FIGUREN

Fig. 1 zeigt eine schematische Darstellung einer Querschnittansicht eines Passagierversorgungskanals mit einem Multifunktionsmodul gemäß einer Ausführungsform der Erfindung.
Fig. 2 zeigt eine schematische Darstellung einer Querschnittansicht eines Multifunktionsmoduls gemäß einer Ausführungsform der Erfindung.
Fig. 3 zeigt eine schematische Darstellung einer Querschnittansicht eines Multifunktionsmodul gemäß einer weiteren Ausführungsform der Erfindung.
Fig. 4b zeigt eine schematische perspektivische Darstellung eines Passagierversorgungskanals mit zwei Multifunktionsmodulen von unten gemäß einer Ausführungsform der Erfindung.
Fig. 4c zeigt eine schematische perspektivische Darstellung von unten eines Ausschnitts einer Flugzeugkabine mit einem Passagierversorgungskanal und zwei Multifunktionsmodulen gemäß einer Ausführungsform der Erfindung.
Fig. 5 zeigt eine schematische Darstellung eines Luftfahrzeugs mit einem Multifunktionsmodul gemäß einer Ausführungsform der Erfindung.
Fig. 6 zeigt ein Flussdiagramm eines Verfahrens zum Versorgen von Passagieren mittels eines Multifunktionsmoduls für einen Passagierversorgungskanal in einem Luftfahrzeug gemäß einer Ausführungsform der Erfindung.

### DETAILLIERTE BESCHREIBUNG BEISPIELHAFTER AUSFÜHRUNGSBEISPIELE

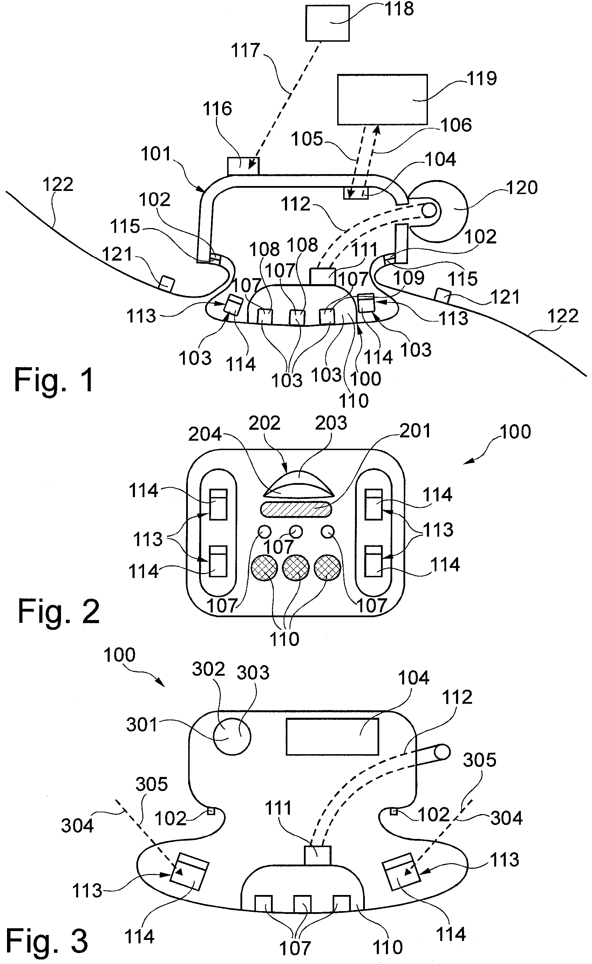

Fig. 1 zeigt einen Passagierversorgungskanal 101 mit einem Multifunktionsmodul 100, das über jeweils erste Schnittstellen 102 an zwei zweiten Schnittstellen 115 des Passagierversorgungskanals 101 angebracht ist. Der Passagierversorgungskanal 101 ist über jeweils einen Anschluss 121 an einer Flugzeugkabinenwand (Kabinendecke) 122 angebracht.

Der Passagierversorgungskanal 101 weist eine Energieversorgungseinheit 116 auf, die zur drahtlosen Übertragung 117 von Energie von einer Energiequelle 118 eines Luftfahrzeugs ausgeführt ist. Die Übertragung 117 von Energie von der Energiequelle 118 des Luftfahrzeugs 500 kann beispielsweise über eine elektromagnetische Kopplung erfolgen.

Die Energieversorgungseinheit 116 des Passagierversorgungskanals 101 ist zum kontaktlosen Übertragen von Strom an eine Versorgungseinheit 103 des Multifunktionsmoduls 100 ausgeführt, wobei die kontaktlose Übertragung von Strom beispielsweise per Induktion oder Resonanzfrequenz erfolgen kann.

Das Multifunktionsmodul 100 weist mehrere Versorgungseinheiten 103 zur Versorgung eines Passagiers auf, wobei die erste Schnittstelle 102 zum Anschluss der Versorgungseinheiten an den Passagierversorgungskanal 101 ausgeführt ist.

Das Multifunktionsmodul 100 weist drei Lesebeleuchtungseinheiten 107 auf sowie eine Luftduscheinheit 110 zum Bereitstellen von Luft für Passagiere des Luftfahrzeugs und eine Gebläseeinheit 111, die an der Luftduscheinheit angeschlossen ist, zum Ansaugen und Ausblasen von Umgebungsluft für die Luftduscheinheit 110 über ein Frischluftversorgungsrohr 112, das an einem Versorgungsrohr 120 angeschlossen ist.

Das Multifunktionsmodul weist ferner eine Kommunikationseinheit 104 auf, die zum drahtlosen Empfangen 105 und zum drahtlosen Übermitteln 106 von Daten zum Steuern der Versorgungseinheiten 103 des Multifunktionsmoduls ausgeführt ist. Dabei können die Daten zum Steuern der wenigstens einen Versorgungseinheit 103 von einem Kabinen-Management-System 119 des Luftfahrzeugs drahtlos empfangen 105 und an das Kabinen-Management-System 119 drahtlos übermittelt 106 werden.

Das Multifunktionsmodul weist ferner zwei Sauerstoffversorgungseinheiten 113, die in Form von zwei Sauerstoffmasken 113 ausgeführt sein kann, und die hinter jeweils einer Klappe 114 angeordnet ist, auf. Die Klappe 114 ist zum automatischen Öffnen im Notfall ausgeführt und kann durch einen Stromstoß oder durch ein Datensignal aktiviert werden.

Die Lesebeleuchtungseinheiten 107 können mit einer Technologie aus der Gruppe bestehend aus Leuchtdioden (LED)-Technologie 108 und organischen Leuchtdioden (OLED)-Technologie 109 ausgeführt sein.

Fig. 2 zeigt ein Multifunktionsmodul 100 mit vier Sauerstoffversorgungseinheiten 113, die hinter jeweils einer Klappe 114 angeordnet sind. Das Multifunktionsmodul 100 weist ferner eine Zeichenanzeigeeinheit 202 zum Anzeigen von Zeichen für die Passagiere des Luftfahrzeugs mit einer vorgelagerten Symbolblende 203 oder mit organischen Leuchtdioden (OLED)-Folien 204 auf. Dabei kann die OLED-Folie beispielsweise nach dem Installieren der Multifunktionsmodule 100 als Streifen für mehrere Multifunktionsmodule 100 an mehreren Multifunktionsmodulen 100 angebracht werden.

Das Multifunktionsmodul weist ferner eine Lautsprechereinheit 201 auf zum Übermitteln von akustischen Daten an die Passagiere des Luftfahrzeugs auf.

In Fig. 2 werden drei Lesebeleuchtungseinheiten 107 gezeigt, die das Multifunktionsmodul 100 aufweist, und die zum Bereitstellen einer Beleuchtung zum Lesen für die Passagiere des Luftfahrzeugs ausgeführt sind.

Das Multifunktionsmodul weist weiterhin drei Luftduscheinheiten 110 auf.

Fig. 3 zeigt gemäß Fig. 1 ein Multifunktionsmodul mit einer Kommunikationseinheit 104, drei Lesebeleuchtungseinheiten 107, einer Luftduscheinheit 110 mit einer Gebläseeinheit 111 und einem Frischluftversorgungsrohr 112 sowie zwei Sauerstoffversorgungseinheiten 113, die hinter jeweils einer Klappe 114 angeordnet sind. Die Klappen 114 sind zum automatischen Öffnen im Notfall ausgeführt, wobei die Klappen 114 zum Aktivieren durch einen Stromstoß 304 oder durch ein Datensignal 305 ausgeführt sind.

Das Multifunktionsmodul der Fig. 3 weist ferner eine Sauerstoffspeichereinheit 301 zum Speichern von Sauerstoff und zum Versorgen der Sauerstoffversorgungseinheiten 113 mit Sauerstoff auf, wobei die Sauerstoffspeichereinheit 301 aus der Gruppe bestehend aus einer chemischen Patrone 302 und einer Druckgasflasche 303 gebildet sein kann.

Die beiden ersten Schnittstellen 102 sind zum Anschluss der Versorgungseinheit 103 an einen Passagierversorgungskanal ausgeführt, beispielsweise über eine mechanische Schnittstelle.

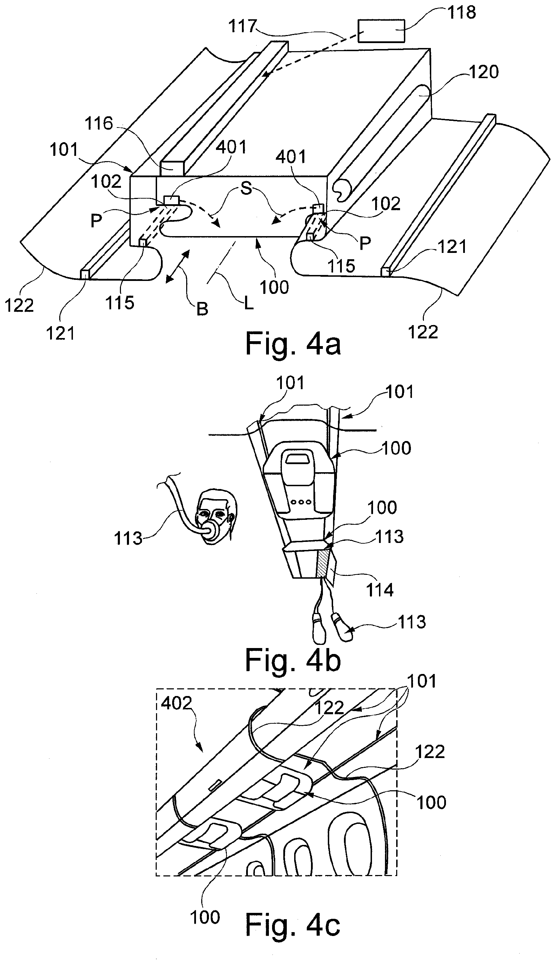

Fig. 4a zeigt eine perspektivische Darstellung eines Passagierversorgungskanals 101, in dem ein Multifunktionsmodul 100 in einer Luftfahrzeuglängsachse L in beide Richtungen B beweglich angeordnet ist. Dabei sind zwei Schnittstellen 102 des Multifunktionsmoduls 100 zum Anschluss über eine zweite Schnittstelle 115 des Passagierversorgungskanals ausgeführt.

Ein Anschließen von wenigstens einer Versorgungseinheit des Multifunktionsmoduls 103 erfolgt bei einer Bewegung des Multifunktionsmoduls 100 in eine Endposition P bei einem Installieren des Multifunktionsmoduls an den Passagierversorgungskanal 101.

Das Multifunktionsmodul 100 weist zwei Positionserfassungseinheiten 401 auf, die zum Erfassen einer definierten Endposition P des Multifunktionsmoduls 100 bei einem Installieren des Multifunktionsmoduls 100 an den Passagierversorgungskanal 101 ausgeführt sind. Die Positionserfassungseinheiten 401 sind beim Erreichen der definierten Endposition P des Multifunktionsmoduls 100 bei dem Installieren des Multifunktionsmoduls 100 an den Passagierversorgungskanal 101 zum Abgeben eines Signals S ausgeführt, wobei das Signal S akustisch oder optisch sein kann.

Fig. 4a zeigt ferner eine Energieversorgungseinheit 116 des Passagierversorgungskanals 101, die zur drahtlosen Übertragung 117 von Energie von einer Energiequelle 118 des Luftfahrzeugs ausgeführt ist, beispielsweise über elektromagnetische Kopplung. Ein Versorgungsrohr 120 zum Versorgen des Multifunktionsmoduls 100 mit Frischluft ist an dem Passagierversorgungskanal 101 angebracht. Der Passagierversorgungskanal ist über jeweils einen Anschluss 121 an der Flugzeugkabinenwand (Kabinendecke) 122 angeschlossen.

Fig. 4b zeigt eine schematische perspektivische Darstellung eines Passagierversorgungskanals 101 mit zwei Multifunktionsmodulen 100 von unten, wobei in die Multifunktionsmodule 100 Sauerstoffversorgungseinheiten 113 integriert sind, die hinter jeweils einer Klappe 114 angeordnet sind. Die Klappen 114 sind zum automatischen Öffnen im Notfall ausgeführt, wobei die Klappen 114 zum Aktivieren durch einen Stromstoß oder durch ein Datensignal ausgeführt sind.

Fig. 4c zeigt eine schematische perspektivische Darstellung von unten eines Ausschnitts einer Flugzeugkabine 402 mit einem Passagierversorgungskanal 101 und zwei daran angeschlossenen Multifunktionsmodulen 100. Der Passagierversorgungskanal 101 ist an Flugzeugkabinenwänden (der Kabinendecke) 122 angebracht.

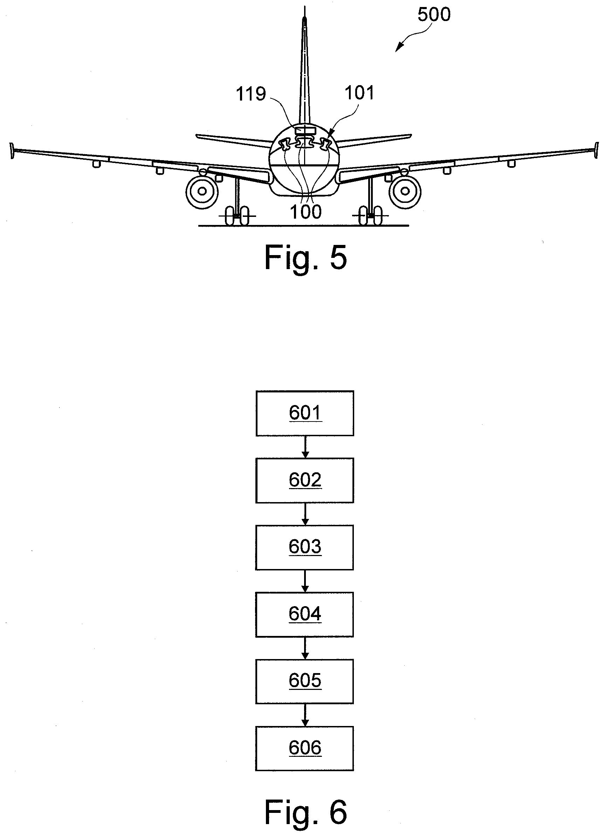

Fig. 5 zeigt eine schematische Darstellung eines Luftfahrzeugs 500 mit drei Multifunktionsmodulen 100 und einem Kabinen-Management-System 119, das zur drahtlosen Kommunikation mit den Multifunktionsmodulen 100 ausgeführt ist.

Fig. 6 zeigt ein Flussdiagramm eines Verfahrens 600 zum Versorgen von Passagieren mittels eines Multifunktionsmoduls für einen Passagierversorgungskanal in einem Luftfahrzeug mit den folgenden Schritten: In einem Schritt 601 erfolgt ein Integrieren wenigstens einer Versorgungseinheit in das Multifunktionsmodul, In einem weiteren Schritt 602 erfolgt das Anbringen des Multifunktionsmoduls an dem Passagierversorgungskanal mittels einer ersten Schnittstelle, beispielsweise mittels einer mechanischen Schnittstelle. In einem Schritt 603 erfolgt das Bereitstellen wenigstens einer Funktion mittels der wenigstens einen Versorgungseinheit für einen Passagier des Luftfahrzeugs. In einem weiteren Schritt 604 erfolgt ein automatisches Anschließen der wenigstens einen Versorgungseinheit bei einer Bewegung des Multifunktionsmoduls in einer Installationsposition bei einem Installieren des Multifunktionsmoduls an den Passagierversorgungskanal. In Schritt 605 erfolgt ein drahtloses Versorgen des Multifunktionsmoduls mit Energie mittels einer Energieversorgungseinheit. In einem Schritt 606 erfolgt ein drahtloses Empfangen und drahtloses Übermitteln von Daten zum Steuern der wenigstens eines Versorgungseinheit des Multifunktionsmoduls mittels einer Kommunikationseinheit.

Obwohl die Erfindung unter Bezugnahme auf die Ausführungsbeispiele beschrieben wurde, können verschiedene Änderungen und Modifikationen vorgenommen werden, ohne den Schutzbereich der Erfindung zu verlassen.

Ergänzend ist darauf hinzuweisen, dass "umfassend" oder "aufweisend" keine anderen Elemente oder Schritte ausschließt und "eine" oder "ein" keine Vielzahl ausschließt. Insbesondere kann Multifunktionsmodul für einen Passagierversorgungskanal in einem Luftfahrzeug beispielsweise mehr als eine erste Schnittstelle, mehr als eine Versorgungseinheit zur Versorgung eines Passagiers, mehr als eine Kommunikationseinheit, mehr als eine Lesebeleuchtungseinheit, mehr als eine Lautsprechereinheit, mehr als Zeichenanzeigeeinheit, mehr als ein Luftduscheinheit, mehr als eine Gebläseeinheit, mehr als ein Frischluftversorgungsrohr, mehr als eine Sauerstoffversorgungseinheit, mehr als eine Sauerstoffspeichereinheit, mehr als eine chemische Patrone, mehr als eine Druckgasflasche, mehr als eine Positionserfassungseinheit, mehr als eine Klappe, sowie der Passagierversorgungskanal mehr als ein Multifunktionsmodul, mehr als eine zweite Schnittstelle, mehr als eine Energieversorgungseinheit, mehr als ein Versorgungsrohr und das Luftfahrzeug mehr als ein Kabinen-Management-System und mehr als ein Multifunktionsmodul aufweisen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale öder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Passagierversorgungskanal (101) für ein Luftfahrzeug (500), mit
a.1) einem Multifunktionsmodul (100), das
a.2) wenigstens eine Versorgungseinheit (103) zur Versorgung eines Passagiers aufweist,
a.3) eine erste Schnittstelle (102) der Versorgungseinheit aufweist, die zum Anschluss der Versorgungseinheit (103) ausgebildet ist, und
a.4) eine Positionserfassungseinheit (401), die zum Erfassen einer definierten Endposition (P) des Multifunktionsmoduls (100) bei einem Installieren des Multifunktionsmoduls (100) an den Passagierversorgungskanal (101) ausgebildet ist;
b.1) einer zweiten Schnittstelle (115) des Passagierversorgungskanals,
b.2) die zum Anschluss der Versorgungseinheit (103) des Multifunktionsmoduls (100) über die erste Schnittstelle (102) ausgebildet ist; und
c.1) einer Energieversorgungseinheit (116),
c.2) die zur drahtlosen Übertragung (117) von Energie von einer Energiequelle (118) des Luftfahrzeuges (500) zur Energieversorgungseinheit (116) und von der Energieversorgungseinheit (116) in das Multifunktionsmodul (100) ausgebildet ist.

2. Passagierversorgungskanal nach Anspruch 1,
wobei ein Anschließen der wenigstens einen Versorgungseinheit (103) automatisch bei einer Bewegung des Multifunktionsmoduls (100) in eine Endposition (P) bei einem Installieren des Multifunktionsmoduls (100) an den Passagierversorgungskanal (101) erfolgt.

3. Passagierversorgungskanal nach Anspruch 1 oder 2, wobei das Multifunktionsmodul (100) weiterhin aufweist:
eine Kommunikationseinheit (104);
wobei die Kommunikationseinheit (104) zum drahtlosen Empfangen (105) und zum drahtlosen Übermitteln (106) von Daten zum Steuern der wenigstens einen Versorgungseinheit (103) des Multifunktionsmoduls (100) ausgebildet ist.

4. Passagierversorgungskanal nach einem der vorhergehenden Ansprüche, wobei das Multifunktionsmodul (100) weiterhin aufweist:
eine Lesebeleuchtungseinheit (107);
wobei die Lesebeleuchtungseinheit (107) zum Bereitstellen einer Beleuchtung zum Lesen für die Passagiere des Luftfahrzeuges (500) ausgebildet ist;
und die Lesebeleuchtungseinheit (107) mit einer Technologie aus der Gruppe bestehend aus Leuchtdioden (LED)-Technologie (108) und Organische Leuchtdioden (OLED)-Technologie (109) ausgebildet ist.

5. Passagierversorgungskanal nach einem der vorhergehenden Ansprüche, wobei das Multifunktionsmodul (100) weiterhin aufweist:
eine Lautsprechereinheit (201);
wobei die Lautsprechereinheit (201) zum Übermitteln von akustischen Daten an die Passagiere des Luftfahrzeugs (500) ausgebildet ist.

6. Passagierversorgungskanal nach einem der vorhergehenden Ansprüche, wobei das Multifunktionsmodul (100) weiterhin aufweist:
eine Zeichenanzeigeeinheit (202);
wobei die Zeichenanzeigeeinheit (202) zum Anzeigen von Zeichen für die Passagiere des Luftfahrzeugs (500) ausgebildet ist;
und die Zeichenanzeigeeinheit (202) mit vorgelagerten Symbolblenden (203) oder mit Organischen Leuchtdioden (OLED)-Folien (204) ausgebildet ist.

7. Passagierversorgungskanal nach einem der vorhergehenden Ansprüche, wobei das Multifunktionsmodul (100) weiterhin aufweist:
eine Luftduscheinheit (110);
eine Gebläseeinheit (111);
wobei die Luftduscheinheit (110) zum Bereitstellen von Luft für die Passagiere des Luftfahrzeugs (500) ausgebildet ist;
und die Gebläseeinheit (111) zum Ansaugen und Ausblasen von Umgebungsluft für die Luftduscheinheit (110) ausgebildet ist.

8. Passagierversorgungskanal nach einem der vorhergehenden Ansprüche, wobei das Multifunktionsmodul (100) weiterhin aufweist:
eine Sauerstoffversorgungseinheit (113);
eine Sauerstoffspeichereinheit (301);
wobei die Sauerstoffversorgungseinheit (113) zum Versorgen der Passagiere mit Sauerstoff ausgebildet ist;
die Sauerstoffspeichereinheit (301) zum Speichern von Sauerstoff und zum Versorgen der Sauerstoffversorgungseinheit (113) mit Sauerstoff ausgebildet ist;
und die Sauerstoffspeichereinheit (301) aus einer Gruppe bestehend aus einer chemischen Patrone (302) und einer Druckgasflasche (303) gebildet ist.

9. Passagierversorgungskanal nach einem der vorhergehenden Ansprüche, wobei die Positionserfassungseinheit (401) beim Erreichen der definierten Endposition (P) des Multifunktionsmoduls (100) bei dem Installieren des Multifunktionsmoduls (100) an den Passagierversorgungskanal (101) zum Abgeben eines Signals (S) ausgebildet ist.

10. Passagierversorgungskanal nach Anspruch 8 oder 9, wobei das Multifunktionsmodul (100) weiterhin aufweist:
eine Klappe (114);
wobei die Sauerstoffversorgungseinheit (113) hinter der Klappe (114) angeordnet ist;
wobei die Klappe (114) zum automatischen Öffnen im Notfall ausgeführt ist;
wobei die Klappe (114) zum Aktivieren durch einen Stromstoß (304) oder
durch ein Datensignal (305) ausgeführt ist.

11. Luftfahrzeug mit einem Passagierversorgungskanal (101) nach einem der Ansprüche 1 bis 10, wobei das Luftfahrzeug ein Kabinen-Management-System (119) aufweist;
und das Kabinen-Management-System (119) zum Kommunizieren (105, 106) mit dem Multifunktionsmodul (100) ausgeführt ist.

12. Verfahren (600) zum Versorgen von Passagieren mittels eines Multifunktionsmoduls (100) für einen Passagierversorgungskanal (101) nach einem der Ansprüche 1 bis 11 in einem Luftfahrzeug (500), das Verfahren (600) aufweisend die Schritte:
Integrieren wenigstens einer Versorgungseinheit (103) in das Multifunktionsmodul (100, 601);
Anbringen des Multifunktionsmoduls (100) an dem Passagierversorgungskanal (101) mittels der ersten und zweiten Schnittstelle (102, 602);
und Bereitstellen wenigstens einer Funktion mittels der wenigstens einen Versorgungseinheit (103) für einen Passagier des Luftfahrzeugs (500, 603).

13. Verfahren (600) nach Anspruch 12, weiterhin aufweisend die Schritte:
Automatisches Anschließen der wenigstens einen Versorgungseinheit (103) bei einer Bewegung des Multifunktionsmoduls (100) in eine Installationsposition (P) bei einem Installieren des Multifunktionsmoduls (100) an den Passagierversorgungskanal (101, 604);
Drahtloses Versorgen des Multifunktionsmoduls (100) mit Energie mittels der Energieversorgungseinheit (116, 605);
Drahtloses Empfangen (105) und drahtloses Übermittelns (106) von Daten zum Steuern der wenigstens einen Versorgungseinheit (103) des Multifunktionsmoduls (100) mittels einer Kommunikationseinheit (104, 606).

## Claims

1. Passenger supply channel (101) for an aircraft (500), with
a.1) a multifunction module (100), which
a.2) comprises at least one supply unit (103) for supply of a passenger,
a.3) comprises a first interface (102) of the supply unit which is designed for connection of the supply unit (103), and
a.4) a position detection unit (401) which is designed for detecting a defined end position (P) of the multifunction module (100) at an installation of the multifunction module (100) to the passenger supply channel (101);
b.1) a second interface (115) of the passenger supply channel,
b.2) which is designed for connection of the supply unit (103) of the multifunction module (100) via the first interface (102), and
c.1) an energy supply unit (116),
c.2) which is designed for wireless transmission (117) of energy from an energy source (118) of the aircraft (500) to the energy supply unit (116) and from the energy supply unit (116) into the multifunction module (100).

2. Passenger supply channel according to claim 1,
wherein a connection of the at least one supply unit (103) takes place automatically with a movement of the multifunction module (100) into an end position (P) at an installation of the multifunction module (100) to the passenger supply channel (101).

3. Passenger supply channel according to claim 1 or 2, wherein the multifunction module (100) further comprises:
a communication unit (104),
wherein the communication unit (104) is designed for wireless reception (105) and for wireless transmission (106) of data for controlling the at least one supply unit (103) of the multifunction module (100).

4. Passenger supply channel according to one of the preceding claims,
wherein the multifunction module (100) further comprises:
a reading illumination unit (107):
wherein the reading illumination unit (107) is designed for providing an illumination for reading for the passengers of the aircraft (500),
and the reading illumination unit (107) is designed with a technology from the group consisting of light emitting diodes (LED) technology (108) and organic light emitting diodes (OLED) technology (109).

5. Passenger supply channel according to one of the preceding claims,
wherein the multifunction module (100) further comprises:
a loudspeaker unit (201);
wherein the loudspeaker unit (201) is designed for transmission of acoustical data to the passengers of the aircraft (500).

6. Passenger supply channel according to one of the preceding claims,
wherein the multifunction module (100) further comprises:
a character display unit (202);
wherein the character display unit (202) is designed for displaying characters for the passengers of the aircraft (500);
and the character display unit (202) is designed with symbol faceplates (203) arranged in advance or with organic light emitting diodes (OLED) films (204).

7. Passenger supply channel according to one of the preceding claims,
wherein the multifunction module (100) further comprises:
an air shower unit (110);
a fan unit (111);
wherein the air shower unit (110) is designed for providing air for the passengers of the aircraft (500);
and the fan unit (111) is designed for suctioning and blowing out of environmental air for the air shower unit (110).

8. Passenger supply channel according to one of the preceding claims,
wherein the multifunction module (100) further comprises:
an oxygen supply unit (113);
an oxygen storage unit (301);
wherein the oxygen supply unit (113) is designed for supplying the passengers with oxygen;
the oxygen storage unit (301) is designed for storing oxygen and for supplying the oxygen supply unit (113) with oxygen;
and the oxygen storage unit (301) is selected from a group consisting of a chemical cartridge (302) and a pressurized gas cylinder (303).

9. Passenger supply channel according to one of the preceding claims,
wherein the position detection unit (401) at reaching the defined end position (P) of the multifunction unit (100) at the installation of the multifunction module (100) at the passenger supply channel (101) is designed for emitting a signal (S).

10. Passenger supply channel according to claim 8 or 9, wherein the multifunction module (100) further comprises:
a flap (114);
wherein the oxygen supply unit (113) is arranged behind the flap (114);
wherein the flap (114) is designed for automatically opening in an emergency;
wherein the flap (114) is designed for activation by a surge current (304) or by a data signal (305).

11. Aircraft with a passenger supply channel (101) according to one of claims 1 to 10, wherein the aircraft comprises a cabin management system (119);
and the cabin management system (119) is designed for communicating (105, 106) with the multifunction module (100).

12. Method (600) for supplying passengers by means of a multifunction module (100) for a passenger supply channel (101) according to one of claims 1 to 11 in an aircraft (500), the method (600) comprising the steps of:
integrating at least one supply unit (103) into the multifunction module (100, 601);
installing the multifunction module (100) at the passenger supply channel (101) by means of the first and second interfaces (102, 602);
and providing at least one function by means of the at least one supply unit (103) for a passenger of the aircraft (500, 603).

13. Method according to claim 12, further comprising the steps of:
automatically installing the at least one supply unit (103) at a movement of the multifunction module (100) into an installation position (P) at an installment of the multifunction module (100) on the passenger supply channel (101, 604);
wireless supply of the multifunction module (100) with energy by means of the energy supply unit (116, 605);
wireless reception (105) and wireless transmission (106) of data for controlling the at least one supply unit (103) of the multifunction module (100) by means of a communication unit (104, 606).

## Revendications

1. Canal d'alimentation de passager (101) pour un avion (500), avec
a.1) un module multifonction (100), qui
a.2) comprend au moins une unité d'alimentation (103) pour alimenter un passager,
a.3) une première interface (102) de l'unité d'alimentation, qui est conçue pour connecter l'unité d'alimentation (103), et
a.4) une unité de détection de position (401) qui est configurée pour détecter une position finale définie (P) du module multifonction (100) lors de l'installation du module multifonction (100) sur le canal d'alimentation de passager (101);
b.1) une deuxième interface (115) du canal d'alimentation de passager,
b.2) qui est conçu pour connecter l'unité d'alimentation (103) du module multifonction (100) via la première interface (102); et
c.1) une unité d'alimentation électrique (116),
c.2) qui est adapté pour la transmission sans fil (117) d'énergie d'une source d'énergie (118) de l'avion (500) à l'unité d'alimentation électrique (116) et de l'unité d'alimentation électrique (116) au module multifonction (100).

2. Canal d'alimentation de passager selon la revendication 1,
dans lequel une connexion de la au moins une unité d'alimentation (103) a lieu automatiquement lorsque le module multifonction (100) se déplace dans une position finale (P) lorsque le module multifonction (100) est installé sur le canal d'alimentation passager.

3. Canal d'alimentation de passager selon la revendication 1 ou 2, dans lequel le module multifonction (100) comprend en outre:
une unité de communication (104);
dans lequel l'unité de communication (104) est adaptée pour recevoir sans fil (105) et transmettre sans fil (106) des données pour commander la au moins une unité d'alimentation (103) du module multifonction (100).

4. Canal d'alimentation passager selon l'une des revendications précédentes, dans lequel le module multifonction (100) comprend en outre:
une unité d'éclairage de lecture (107);
dans lequel l'unité d'éclairage de lecture (107) est adaptée pour fournir un éclairage pour la lecture aux passagers de l'aéronef (500);
et l'unité d'éclairage de lecture (107) est formée avec une technologie choisie dans le groupe consistant en une technologie de diode électroluminescente (DEL) (108) et une technologie de diode électroluminescente organique (OLED) (109).

5. Canal d'alimentation passager selon l'une des revendications précédentes, dans lequel le module multifonction (100) comprend en outre:
une unité de haut-parleur (201);
dans lequel l'unité de haut-parleur (201) est adaptée pour transmettre des données acoustiques aux passagers de l'aéronef (500).

6. Canal d'alimentation passager selon l'une des revendications précédentes, dans lequel le module multifonction (100) comprend en outre:
une unité d'affichage de caractères (202);
dans lequel l'unité d'affichage de caractères (202) est adaptée pour afficher des caractères pour les passagers de l'aéronef (500);
et l'unité d'affichage de caractères (202) est formée avec des ouvertures de symboles amont (203) ou avec des films de diodes électroluminescentes organiques (OLED) (204).

7. Canal d'alimentation passager selon l'une des revendications précédentes, dans lequel le module multifonction (100) comprend en outre:
une unité de douche à l'air (110);
une unité de soufflante (111);
dans lequel l'unité de douche à air (110) est configurée pour fournir de l'air aux passagers de l'aéronef (500);
et l'unité de soufflante (111) est configurée pour aspirer et souffler de l'air ambiant pour l'unité de douche à air (110).

8. Canal d'alimentation passager selon l'une des revendications précédentes, dans lequel le module multifonction (100) comprend en outre:
une unité d'alimentation en oxygène (113);
une unité de stockage d'oxygène (301);
dans lequel l'unité d'alimentation en oxygène (113) est conçue pour fournir de l'oxygène aux passagers;
l'unité de stockage d'oxygène (301) est configurée pour stocker de l'oxygène et pour fournir de l'oxygène à l'unité d'alimentation en oxygène (113);
et l'unité de stockage d'oxygène (301) est formée d'un groupe constitué d'une cartouche chimique (302) et d'une bouteille de gaz comprimé (303).

9. Canal d'alimentation de passagers selon l'une quelconque des revendications précédentes, dans lequel l'unité de détection de position (401) est adaptée pour émettre un signal (S) lorsqu'elle atteint la position finale définie (P) du module multifonction (100) lors de l'installation du module multifonction (100) sur le canal d'alimentation de passager (101).

10. Canal de service de passagers selon la revendication 8 ou 9, dans lequel le module multifonction (100) comprend en outre:
un rabat (114);
dans lequel l'unité d'alimentation en oxygène (113) est disposée derrière le volet (114);
dans lequel le rabat (114) est adapté pour être ouvert automatiquement dans un état d'urgence;
dans lequel le rabat (114) est configuré pour être activé par une surtension (304) ou par un signal de données (305).

11. Avion ayant un canal d'alimentation de passager (101) selon l'une quelconque des revendications 1 à 10, dans lequel l'aéronef comprend un système de gestion de cabine (119);
et le système de gestion de cabine (119) est adapté pour communiquer (105, 106) avec le module multifonction (100).

12. Procédé (600) pour alimenter des passagers au moyen d'un module multifonction (100) pour un canal d'alimentation de passager (101) selon l'une des revendications 1 à 11 dans un aéronef (500), le procédé (600) comprenant les étapes:
intégrer d'au moins une unité d'alimentation (103) dans le module multifonction (100, 601);
Attacher le module multifonction (100) au canal d'alimentation de passager (101) via les première et seconde interfaces (102, 602);
et fournir au moins une fonction au moyen de la au moins une unité d'alimentation (103) pour un passager de l'aéronef (500, 603).

13. Procédé (600) selon la revendication 12, comprenant en outre les étapes:
Connecter automatiquement la au moins une unité d'alimentation (103) pendant un d'placement du module multifonction (100) à une position d'installation (P) lors de l'installation du module multifonction (100) sur le canal d'alimentation passager (101, 604);
Alimentation sans fil du module multifonction (100) avec énergie au moyen de l'unité d'alimentation électrique (116, 605);
Réception sans fil (105) et transmission sans fil (106) de données pour commander la au moins une unité d'alimentation (103) du module multifonction (100) au moyen d'une unité de communication (104, 606).
